# EUROPÄISCHE PATENTSCHRIFT

(11) **EP 1 298 378 B1**
(45) Veröffentlichungstag und Bekanntmachung des Hinweises auf die Patenterteilung: **16.04.2008**
(21) Anmeldenummer: 02020268.5
(22) Anmeldetag: 11.09.2002
(51) Int. Cl.: F16L 37/22, F16L 37/23, F16L 37/42, F16L 37/084

(54) **Buchsenteil mit drehbarer Betätigungshülse**
Socket activated by a rotatable sleeve
Elément de connexion femelle activé par un manchon rotatif

(30) Priorität: 26.09.2001 DE 10147505
(43) Veröffentlichungstag der Anmeldung: 02.04.2003
(73) Patentinhaber: Rectus GmbH, 71735 Eberdingen-Nussdorf (DE)
(72) Erfinder: Seifert, Jürgen, 71665 Ensingen (DE)
(74) Vertreter: Rüger, Barthelt & Abel Patentanwälte

(56) Entgegenhaltungen:
- EP-A- 1 006 308
- EP-A- 1 182 391
- FR-A- 2 786 848
- US-A- 3 132 667

## Beschreibung

Aus der Praxis ist ein Buchsenteil für eine pneumatische Entlüftungskupplung bekannt. Das Buchsenteil besteht aus einem Grundkörper, dessen vorder Abschnitt von einem Kunststoffformteil gebildet ist und dessen hinterer Abschnitt aus Metall besteht. Im Grundkörper ist ein durchgehender rotationssymmetrischer Kanal enthalten, der der Aufnahme eines Steckers dient. Die Außenumfangsfläche des Grundkörpers ist mit zwei zueinander diametralen, in Längsrichtung verlaufenden geraden Rippen versehen, die gleichzeitig als Drehsicherung für eine darauf verschiebliche Betätigungshülse dienen.

In dem Grundkörper sind im Abstand zum vorderen Ende zwei schrägverlaufende Langlöcher enthalten, die tangential zu dem Kanal verlaufen und diesen schneiden. In diesen beiden schräg verlaufenden Langlöchern sitzen zwei zylindrische Raststifte, die bei eingeführtem Stecker hinter eine Schulter an den Stecker greifen um den Stecker am Buchsenteil festzuhalten.

Zwischen den beiden schrägverlaufenden Langlöchern befinden sich symmetrisch zwei Langlöcher, deren Längsachse parallel zur Längsachse des Kanals liegt und in denen kugelförmige Haltekörper beweglich geführt sind. Die Haltekörper sollen nach dem Öffnen der Kupplung den Stecker zunächst noch festhalten bis der Druck abgebaut ist, damit der Stecker nicht durch den herrschenden Innendruck herausgeschleudert wird. Um dies zu erreichen befinden sich radial außenliegend, bezogen auf die Haltekugeln, jeweils zwei Halte- oder Stützflächen pro Kugel.

Die eine Stützfläche hat einen geringeren radialen Abstand als die andere Stützfläche. Der radiale Abstand der zweiten Stützfläche ist so bemessen, dass die Haltekugel in dem Langloch in einer Position fixiert wird, in der sie in den Kanal hineinragt. Die zweite Stützfläche hat einen größeren radialen Abstand und gestattet ein radial nach außen gerichtetes Zurückweichen der Haltekugel, bis die Kugel hinter die zylindrische Mandelfläche des Kanals zurückweicht. Die beiden Stützflächen gehen mit einem Sprung ineinander über und zwar an einer solchen Stelle, dass die jeweilige Kugel im Zusammenwirken zwischen der Übergangstelle der Stützflächen und der Wand des Langlochs in einer radialen Position gehalten werden, in der sie in das Lichtraumprofil des Kanals ragt.

Die hinteren Stützflächen sind an einem Druckring als Rippen ausgebildet, der gleichzeitig mit den radial überstehenden Enden der Verriegelungsstifte zusammenwirkt. Mittels einer Schraubendruckfeder 58, die sich andernends über einen Zwischenring an einer Schulter des Grundkörpers abstützt, wird der Druckring gegen die Zylinderstifte gepresst, damit diese in den schrägverlaufenden Langlöchern am vorderen Ende gehalten werden.

Um das Buchsenteil vom Stecker entkuppeln zu können, ist auf dem Grundkörper eine Betätigungshülse axial verschieblich gelagert, die einerseits mit der Zwischenscheibe verrastet ist und andererseits am vorderen Ende ein Füllstück enthält, das ebenfalls in der Betätigungshülse drehfest eingerastet ist. Dieses vordere Füllstück, das im wesentlichen rohrförmige Gestalt hat, enthält die zweiten Halteflächen für die Haltekugeln.

Sowohl das rohrförmige Füllstück als auch der Druckring haben Durchgangsöffnungen, die an die Außenkontur des Grundkörpers angepasst sind, um eine Verdrehsicherung zu gewährleisten.

Die Laschen an denen die hinteren Stützflächen ausgebildet sind haben eine Breite, die deutlich kleiner ist, als der Abstand zwischen den Zylinderstiften derjenigen Stellung in der Sie am dichtesten beieinander liegen.

Damit die Haltekugeln auch mit Sicherheit dann einrasten wenn die Zylinderstifte sich der Freigabestellung nähern, liegen sie bei eingeführtem Stecker im hinteren Ende der parallel zum Grundkörper liegenden Langlöcher. Sie befinden sich dann am Übergang zwischen der hinteren und der vorderen Stützfläche.

Beim Einführen des Steckers werden die Zylinderstifte von der am Stecker vorhandenen Rippe nach hinten gedrängt, wodurch sich ihr Abstand in den schräg zueinander verlaufenden Langlöchern vergrößert um die Rippe passieren zu lassen. Gleichzeitig werden die Haltekugel nach außen gedrückt, was aufgrund der Bemessung der Betätigungshülse eine Bewegung der äußeren Betätigungshülse in eine Richtung entgegen der Einführbewegung des Steckers zur Folge hat.

Eine solche entgegen gerichtete Bewegung der Betätigungshülse ist unzweckmäßig, da sie die Handhabung behindert.

Wegen des im allgemeinen recht hohen Innendrucks bedarf es einer verhältnismäßig großen Kraft um beim Kuppeln den Stecker in dem Buchsenteil zu verriegeln, wobei gleichzeitig das in dem Buchsenteil enthaltene Ventil geöffnet wird. Der Benutzer ist also gezwungen das Buchsenteil mit der ganzen Hand und großer Kraft festzuhalten. Durch den festen Griff behindert er zwangsläufig die mitgegriffene Betätigungshülse, die sich zum verrasten des Stecker bewegen muss.

Da zum Entriegeln die Betätigungshülse, wie erwähnt, zurückgeschoben werden muss, kann es zu Fehlbedienungen kommen, wenn beim Einstecken versehentlich die Hülse ebenfalls zurückgeschoben wird. Der Stecker kann nicht Einrasten, weil die Verriegelungsstifte durch die Betätigungshülse in der Entriegelstellung festgehalten werden.

Außerdem ist die Betätigungskraft zum Entriegeln verhältnismäßig hoch. Auf ihren Verriegelungsstiften lastet eine Kraft, die der wirksamen Querschnittsfläche des Steckers und dem herrschenden Druck proportional ist. Die Betätigungshülse lässt sich erst verschieben, wenn eine noch größere Kraft aufgebracht wird.

Aus der älteren EP 1 182 391 ist ein Buchsenteil für eine pneumatische Belüftungskupplung bekannt. Zu dem Buchsenteil gehört ein Grundkörper, der einen durchgehenden, geraden und rotationssymmetrischen Kanalabschnitt aufweist. In dem vorderen Kanalabschnitt ist ein Stecker einführbar. In dem Grundkörper sind zwei Schlitze vorgesehen, die das Lichtraumprofil des Kanals tangential schneiden und deren Seitenwände parallel zu einer Ebene sind, die schräg zur Längsachse des Kanals ausgerichtet sind. In jedem der beiden Schlitze sitzt je ein Verriegelungsstift, der mit seinen Endabschnitten über die Außenumfangsfläche des Grundkörpers übersteht. Mittels einer Schraubenfeder werden die Verrieglungsstifte in jene Stellung vorgespannt, in der sie am Grund ihres zugehörigen Schlitzes liegen, so dass sie ein Stück weit in das Lichtraumprofil des Kanals ragen. Die Druckfeder greift an den über den Grundkörper überstehenden Abschnitt an.

Auf dem Grundkörper ist eine Betätigungshülse axial verschieblich, die mit den überstehenden Enden der Verrieglungsstifte zusammenwirkt. Gemäß einem Ausführungsbeispiel ist mit der Betätigungshülse eine Rippe einstückig, die zwischen den Enden der Verrieglungsstifte hindurchführt.

Ferner enthält die bekannte Entlüftungskupplung im Buchsenteil ein Ventil, das durch den Stecker gesteuert wird.

Um den Stecker in der Entlüftungsstellung zu halten, sind ferner zweit Fangkugeln vorgesehen, die in Langlöchern aufgenommen sind. Die Langlöcher sind so positioniert, dass in einer Endstellung der Fangkugeln ihr Berührungspunkt an dem Stecker in derselben Ebene liegt, in der auch die Verrieglungsstifte in den Stecker eingreifen. Die andere Endstellung liegt weiter in Richtung auf die Mündung des Buchsenteils.

Durch entsprechende Steuerflächen an der Innenseite der Betätigungshülse können die Fangkugeln formschlüssig in eine Stellung bewegt werden, in der sie in den Kanal vorragen.

In der vollständig gekuppelten Stellung zwischen Buchsenteil und Stecker besteht eine nach außen hin abgedichtete Fluidverbindung zwischen diesen beiden Teilen. Zum Entriegeln des Steckers ist die Betätigungshülse zunächst auf dem Buchsenteil von dem Stecker weg zu ziehen, wodurch einerseits die Verrieglungsstifte außer Eingriff mit dem Stecker gebracht werden, andererseits werden auch zeitlich überdeckend die Fangkugeln in die Position zum Fangen des Steckers gebracht werden. Zusammen mit dem Stecker bewegen sie sich an das der Mündung benachbarten Ende des Langlochs und damit an eine Stelle in der Betätigungshülse, in der sie zwangsläufig mit der Rille des Steckers in Eingriff gehalten werden. Die Fangstellung zwischen Buchsenteil und Stecker wird aufgehoben, indem die Betätigungshülse aus der zentrierten Ruhestellung auf dem Buchsenteil weiter nach vorne in Richtung auf den Stecker bewegt wird.

Eine Entriegelung der Verrieglungsstifte durch Drehen der Betätigungshülse ist nicht vorgesehen.

Die EP 1 006 308 offenbart eine ähnliche Konstruktion für eine Schnellkupplung.

Ausgehend hiervon ist es Aufgabe der Erfindung ein neuartiges Buchsenteil für eine Fluidkupplung zu schaffen.

Diese Aufgabe wird erfindungsgemäß mit dem Buchsenteil mit dem Merkmal des Anspruches 1 gelöst.

Bei dem neuen Buchsenteil kann der Stecker ohne Verschieben der Betätigungshülse eingesteckt werden. Die umlaufende Rippe am Steckerteil drängt die Verriegelungsstifte zurück, wobei keine Kraftübertragung auf die Betätigungshülse erfolgt. Die Betätigungshülse bleibt unverändert in ihrer Ruhestellung.

Das Entriegeln geschieht bei der neuen Fluidkupplung durch eine Drehbewegung der Betätigungshülse. Die Drehbewegung lässt die in der Betätigungshülse enthaltene Rippe gegen das den Umfang des Buchsenteils überstehende Ende des Verriegelungsstiftes anstoßen und nimmt den Verriegelungsstift mit. Aufgrund der Schrägfläche, die der schräg verlaufende Schlitz in dem Buchsengrundkörper bildet, wird der Verriegelungsstift radial nach außen und gegen die Wirkung der Vorspanneinrichtung gedrängt. Der Verriegelungsstift vollführt eine Art Schraubenbewegung. Dabei wirkt die radial außen liegende Schlitzwand als Ausschnitt einer Schraubenfläche, längs derer sich der Verriegelungsstift bewegt. Das andere Ende des Verriegelungsstiftes bleibt im Grund des Schlitzes liegen. Aus der Sicht der betätigenden Rippe verhält sich der Verriegelungsstift wie ein einarmiger Hebel, an dessen freiem Ende die Rippe angreift während in einem mittleren Abschnitt der Ringwulst des Steckers aufliegt. Je weiter der Verriegelungsstift radial nach außen gedrängt wird, um so mehr wandert der Angriffspunkt zu dem festen Widerlagerpunkt des Verriegelungsstift4s, wodurch sich das Hebelverhältnis verbessert. Die Betätigungskraft hat die Tendenz gegen Ende des Hubs abzunehmen.

Aufgrund der Drehbewegung sind obendrein Fehlbedienungen weitgehend ausgeschlossen.

Die Rückstellung der Betätigungshülse erfolgt über den Verriegelungsstift. Beim Loslassen der Betätigungshülse wird der Verriegelungsstift durch die Feder in die Ruhestellung gedrückt und nimmt dabei die Betätigungshülse in die Ausgangsstellung zurück.

Die Befestigung des Steckers im Buchsenteil wird sehr zuverlässig, wenn zwei Schlitze mit entsprechenden Verriegelungsstiften vorhanden sind. Entsprechend sind für beide Verriegelungsstifte, die gleichzeitig bewegt werden müssen, zwei Rippen vorhanden. In der Ruhestellung sorgen die beiden Verriegelungsstifte automatisch für eine zentrierte Lage der Betätigungshülse. Da die Anordnung im Wesentlichen punktsymmetrisch ist, kann die Entriegelung aus der zentrierten Ruhestellung der Betätigungshülse in jeder Drehrichtung erfolgen. Somit ist die Kupplung auch für solche Personen ohne Weiteres und fehlerfrei zu bedienen, die mit Rechts- und Linksdrehung gelegentlich Probleme haben.

Die Rippe kann im Falle eines Spritzgußteils ohne weiteres eingeformt werden. Bei einem metallischen Betätigungshülsengehäuse kann die Rippe als Fortsatz an einem rohrförmigen Einsatz ausgebildet sein.

Das erfindungsgemäße Buchsenteil mit Drehbewegung der Betätigungshülse kann auch zusätzlich mit einer Entlüftungseinrichtung versehen sein. Solche Entlüftungseinrichtungen sind dann von Vorteil, wenn der Fluiddruck verhältnismäßig hoch ist und die Gefahr besteht, dass der Stecker nach der Entriegelung nur schwer festzuhalten ist. Die Entlüftungseinrichtung hält den Stecker nach dem Entriegeln in einer Entlüftungsstellung sicher fest und erlaubt ein Abströmen des Gases aus dem an dem Stecker angeschlossene Rohr- oder Schlauchsystem. Die Entlüftungseinrichtung umfasst zweckmäßigerweise auch die Betätigungshülse, die zusätzlich auf dem Buchsengrundkörper translatorisch bewegbar ist. Die Bewegung der Betätigungshülse ist aber dergestalt, dass die translatorische Bewegung die Verriegelungsstifte nicht bewegen kann.

Die Halteeinrichtung kann ein oder mehrere zusätzliche Langlöcher in dem Buchsenteil umfassen, in denen Haltekörper sitzen. Mit Hilfe von Stützflächen werden die Haltekörper entweder in der Stellung gehalten, in der sie zwangsweise in das Lichtraumprofil des Kanals vorragen oder sie werden freigegeben, damit sie aus dem Lichtraumprofil herausgedrängt werden können. In dieser Stellung verhindern die Stützflächen ein vollständiges Freikommen der Haltekörper aus den Langlöchern.

Zumindest eine der Arten von Stützflächen kann dabei auf der radial innen liegenden Fläche der Rippe ausgebildet sein.

Der Zusammenbau und die Konstruktion vereinfachen sich, wenn der Grundkörper aus zwei Teilen besteht, die im montiertem Zustand formschlüssig miteinander verbunden sind. Auf diese Weise lässt sich ohne weiteres eine Schulter unterbringen, mit deren Hilfe ein Verschieben der Betätigungshülse in einer Richtung verhindert werden kann, die gegebenenfalls die Verriegelungsstifte aus der Verriegelungsstellung herausdrängen.

Um die gewünschte, in eine Richtung wirksame Schiebebewegung zu erzwingen, kann ein Wiederlagerring vorgesehen sein, der mit dieser Schulter zusammenwirkt und der in der Betätigungshülse zwischen der Rippe und dem Verschlussring eingespannt ist.

Im Übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:
- Fig. 1: eine Explosionsdarstellung der wesentlichen Teile des erfindungsgemäßen Buchsenteils, in einer perspektivischen Darstellung,
- Fig. 2: den Buchsenteil nach Fig. 1 mit in Ruhestellung befindlicher Betätigungshülse, in einem Querschnitt längs der Linie II-II nach Fig. 4
- Fig. 3: den Buchsenteil nach Fig. 2 in einer ähnlichen Ansicht, jedoch bei gedrehter Betätigungshülse und
- Fig. 4 bis 7: den Buchsenteil nach Fig. 1 in einem Längsschnitt in Verbindung mit einem Stecker in unterschiedlichen Betriebsstellungen.

Als Beispiel für die erfindungsgemäße Fluidkupplung ist in den nachfolgenden Figuren eine sogenannte Entlüftungskupplung veranschaulicht. Die Entlüftungskupplung ermöglicht es den in den Buchsenteil eingesteckten Stecker nach dem Entriegeln in einer Entlüftungszwischenstellung festzuhalten, damit er nicht von dem abströmenden Gas aus dem Buchsenteil herausgeschleudert wird. Die erläuterte Entlüftungseinrichtung ist zweckmäßig, jedoch für die Erfindung nicht notwendigerweise zwingend. Lediglich um den Umfang der Erläuterung des Ausführungsbeispiels nicht unnötig zu vergrößern, wird auf die Erläuterung eines Ausführungsbeispiels ohne Entlüftungseinrichtung verzichtet. Für den Fachmann ist klar, welche Teile zu der Entlüftungseinrichtung gehören und gegebenenfalls weggelassen werden können, wenn auf deren Funktion verzichtet werden kann.

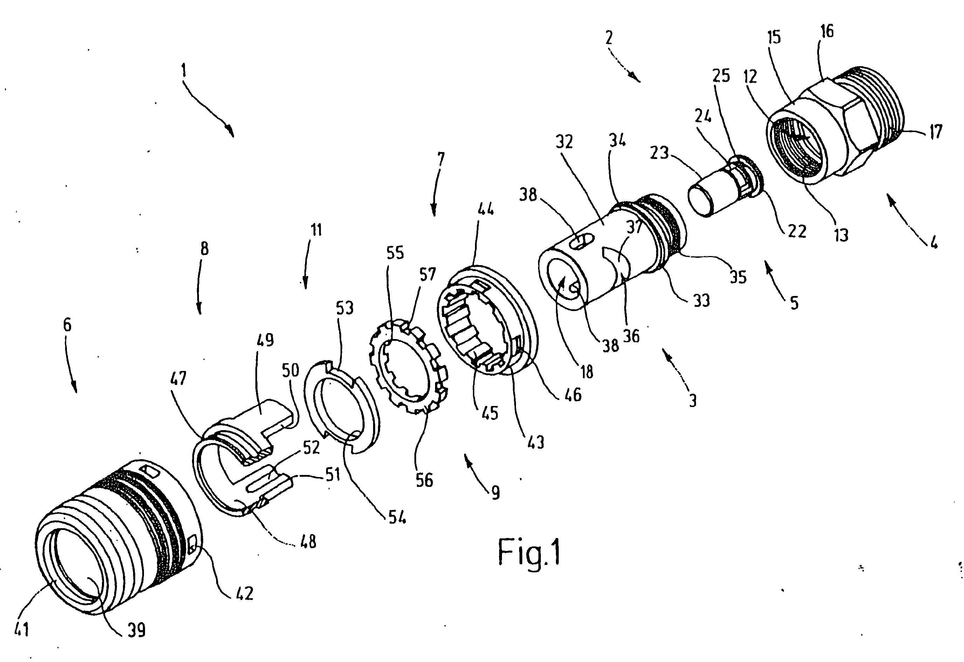

Fig. 1 zeigt in einer perspektivischen Explosionsdarstellung einen Buchsenteil 1 einer Entlüftungskupplung. Zu dem Buchsenteil 1 gehören ein Grundkörper 2, der sich aus einem vorderen Grundkörperabschnitt 3 sowie einem hinteren Grundkörperabschnitt 4 zusammensetzt, ein Ventilverschlussglied 5, eine Betätigungshülse 6 mit deren Abschluss- oder Endring 7, ein Einsatz 8, eine Widerlagerscheibe 9 sowie ein Druckring 11.

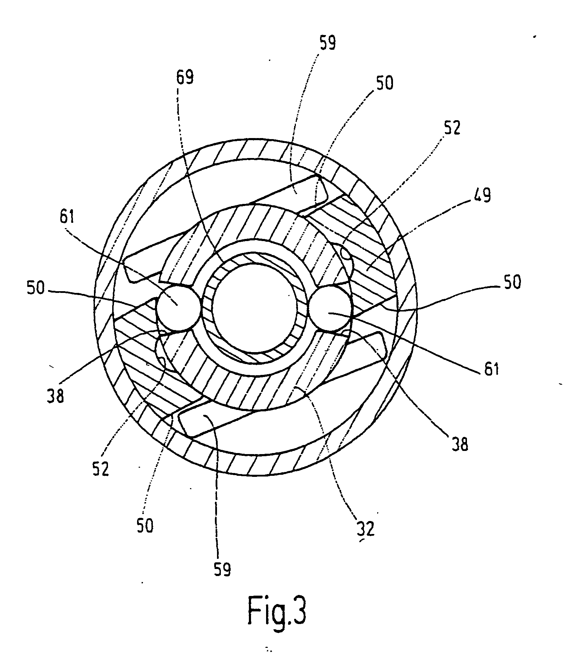

Der hintere Grundkörperabschnitt 4 ist ein im wesentlichen rohrförmiges Gebilde mit einem rotationssymmetrischen Durchlass 12, der an seinem vorderen Ende ein Innengewinde 13 aufweist. Im Inneren verjüngt sich der Durchlass 12 an einer in Fig. 3 erkennbaren Ringschulter 14 zur Rückseite hin.

Auf der Außenseite bildet der hintere Grundkörperabschnitt 4 eine zylindrische, zu dem Durchlass 12 konzentrische Umfangs- und Gleitfläche 15, die am hinteren Ende in einen Sechskantbund 16 übergeht. An den Sechskantbund 16 schließt sich ein Außengewinde 17 an, über das die Entlüftungskupplung 1 mit einem Rohr- oder Schlauchleitungssystem zu verbinden ist, das mit einer Quelle für Druckluft in Verbindung steht.

Der vordere Grundkörperabschnitt 3 ist ebenfalls rohrförmig und ist mit einem rotationssymmetrischen Kanal 18 versehen.

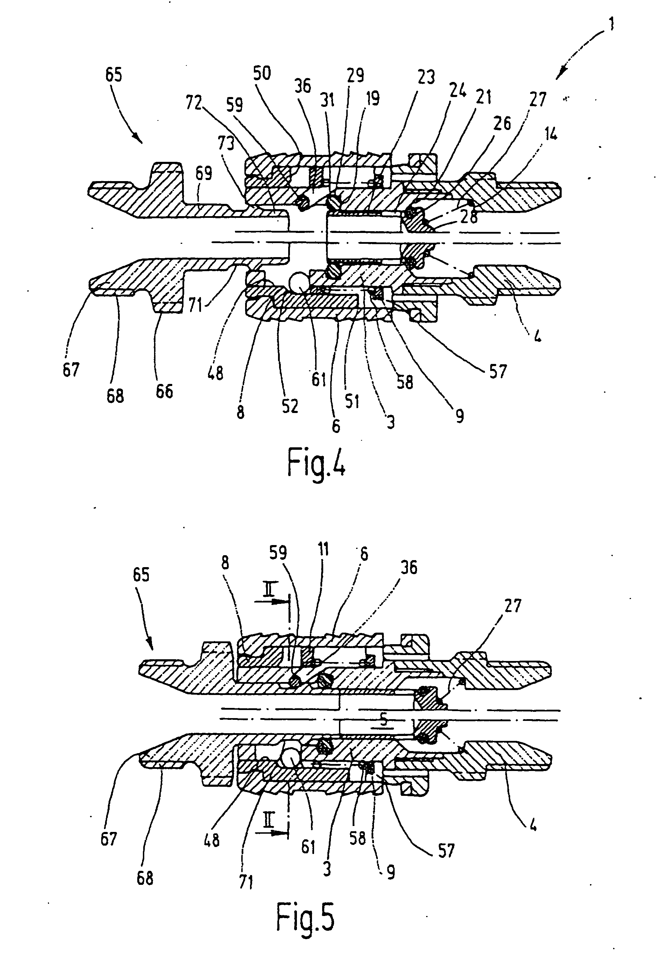

Der Kanal 18 hat bis zu einer wiederum in Figur 4 erkennbaren Schulter 19 einen konstanten Querschnitt. An der Schulter 19 verjüngt sich der Durchmesser des Kanals 18 sprunghaft auf einen kleineren Durchmesser, ab dem der Kanal 18 ebenfalls zylindrisch ist und mit konstantem Durchmesser bis zu einer Kegelfläche 21 durchgeht, die als Ventilsitzfläche dient. Im Anschluss an die Ventilsitzfläche 21 erweitert sich der Kanal 18 erneut auf einen Durchmesser den der Durchlass 12 am vorderen Ende aufweist.

In dem dem hinteren Grundkörperabschnitt 4 zugekehrten Abschnitt des Kanals 18 steckt das Ventilverschlussglied 5, das eine im Wesentlichen becherförmige Gestalt aufweist. Von einem geschlossenen Boden 22 ragt ein zylindrischer Kragen 23 vor, dessen Außendurchmesser so bemessen ist, dass das Ventilverschlussglied 5 mit geringem Spiel in dem hinteren Abschnitt des Kanals 18 verschieblich ist. Am Übergang zum Boden 22 ist der Kragen 23 mit einer Reihe von rechteckigen Durchlässen 24 versehen. Zwischen den Durchlässen 24 und dem vom Betrachter wegzeigenden Ende des Bodens 22 befindet sich eine Ringnut 25 zur Aufnahme eines O-Rings 26, der mit der kegelförmigen Dichtfläche zusammenwirkt.

Um das Ventilverschlussglied 5 in die Schließstellung vorzuspannen, ist eine Kegelfeder 27 vorgesehen, die sich einends auf der Schulter 14 abstützt und anderenends gegen die Rückseite des Bodens 22 wirkt, wo sie mit Hilfe eines Zentrieransatzes 28 radial zentriert ist.

Der Kragen 23 ist auf seiner Außenseite zylindrisch glatt und führt im geschlossenen Zustand mit geringem Spiel durch einen O-Ring 29, der in einer Nut 31 sitzt, die unmittelbar an die Schulterfläche 19 wie in Figur 4 gezeigt anschließt.

Der vordere Grundkörperabschnitt 3 weist in seinem vorderen Abschnitt eine zylindrische Außenumfangsfläche 32 auf, die bis zu einem Bund 33 einen konstanten Querschnitt hat. Der Bund 33 bildet einen nach vorne gerichtete radiale Ringschulter 34.

An den Ringbund 33 schließt sich ein Außengewinde 35 an, mit dem der vordere Grundkörperabschnitt 3 in das Innengewinde 13 des hinteren Grundkörperabschnittes 4 eingeschraubt ist. Im Bereich der Außenumfangsfläche 32 sind zwei schrägverlaufende Schlitze 36 enthalten, die sich bezüglich der Längs- oder Rotationsachse des Grundkörpers 2 diametral gegenüberliegen. Die Schlitze 36 ragen jeweils nur ein kurzes Stück in den Kanal 18.

Die beiden Schlitze 36, von denen wegen der Darstellung lediglich einer in Figur 1 erkennbar ist, sind schräg verlaufende Schlitze. Jeder der beiden Schlitze 36 wird von zwei parallel zueinander verlaufenden Seitenfläche 37 begrenzt. Die durch die Seitenwände 37 definierten Flächen der beiden Schlitze 36 konvergieren in Richtung auf das vordere Ende, wie dies der Querschnitt nach Fig. 4 erkennen läßt.

Symmetrisch zwischen den beiden Schlitzen 36 befinden sich ebenfalls diametral zueinander zwei Langlöcher 38, deren Längsachse parallel zu der Rotationsachse des Grundkörpers 2 liegt. Die Seitenwände der Langlöcher 38 sind konvergierend ausgebildet, damit die lichte Weite auf der Seite des Kanals 18 kleiner ist als auf der Seite der Außenumfangsfläche 32. Die genaue Lage der Langlöcher 38 bezogen auf die Schlitze 36 ergibt sich aus der nachfolgende Funktionsbeschreibung.

Auf dem Grundkörper 2 sitzt verschieblich die rohrförmige Betätigungshülse 6, die einen im Wesentlichen zylindrischen Innenraum 39 aufweist, der sich am vorderen Ende an einem nach innen ragenden Ringbund 41 radial verjüngt. Im hinteren Bereich sind mehrere Rastöffnungen 42 vorgesehen, die sich äquidistant längs dem Umfang verteilen.

Im montierten Zustand steckt in dem hinteren Ende der Betätigungshülse 6 der Abschluss- oder Endring 7, der einen zylindrischen Fortsatz 43 aufweist. Der zylindrische Fortsatz 43 sitzt drehfest in dem Innenraum 39 und geht an seinem von der Betätigungshülse 6 abliegenden Ende in einen nach außen ragenden Ringbund 44 über.

Der zylindrische rohrförmige Fortsatz 43 ist an seiner Innenseite mit einer Vielzahl äquidistant verteilter Rippen 45 versehen, die eine Zylinderfläche begrenzen, deren Durchmesser an den Durchmesser der Zylinderfläche 15 angepasst ist. Der Ring 7 ist auf der Zylinderfläche 15 verschieblich.

Um den Ring 7 mit der Betätigungshülse 6 zu verrasten, trägt der Fortsatz 43 an seiner Umfangsfläche eine Reihe von Rastnasen 46, die mit den Rastöffnungen 42 zusammenpassen, wie dies der Querschnitt in Fig. 4 erkennen läßt.

In der Betätigungshülse 6 steckt im montierten Zustand das Einsatzstück 8, das mit der Betätigungshülse 6 drehfest verklebt oder verschraubt und verstiftet ist. Das Einsatzstück ist in Fig. 1 teilweise aufgebrochen gezeigt.

Diese Ausführungsform eignet sich insbesondere für Varianten, bei denen die Betätigungshülse 6 ein aus Metall bestehendes Drehteil ist. Wenn es sich um ein Kunststoffspritzeteil handelst, kann das Einsatzstück 8 auch einstückig mit der Betätigungshülse 6 ausgeführt sein.

Das Einsatzstück 8 weist eine zylindrische Innenfläche 48 auf, die in noch zu beschreibender Weise als Stützfläche dient und deswegen im Folgenden als solche bezeichnet wird.

An seinem rückwärtigen Ende geht das Einsatzstück 8 in zwei diametral einander gegenüberstehende Forstsätze über, die in der Betätigungshülse 6 radial nach innen vorstehende Rippen 49 bilden. Deren Außenseiten sind Zylinderflächen, die mit der Innenumfangsfläche 39 zusammenpassen. In Umfangsrichtung sind die Rippen 49 von zueinander parallelen Flankenflächen 50 begrenzt. Der Abstand zwischen den beiden Flankenflächen 50 einer Rippe entspricht etwa dem Abstand, den die beiden Schrägschlitze 36 an ihrem Grund voneinander haben.

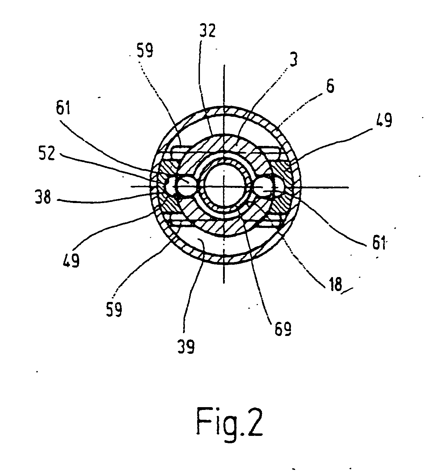

Die Innenseiten 51 der beiden Rippen 49 sind zwei Zylinderflächenabschnitten, deren Krümmungsachse zu der Längsachse des Grundkörpers 2 koaxial ist und die eine Verlängerung der Innenfläche 48 darstellen. Ferner enthalten sie zwei in Längsrichtung liegende Nuten 52 (Fig. 2), die wie gezeigt, im Abstand von dem vorderen Ende der Betätigungshülse 6 beginnen. Die genauen Abmessungen ergeben sich aus der Funktionsbeschreibung weiter unten. Die Nuten 52 dienen als Stütz- oder Halteflächen, wie weiter unten beschrieben ist.

Der radiale Abstand, den die Nuten 52 von der Rotationsachse des Grundkörpers 2 aufweisen ist größer als der Durchmesser der Innenfläche 48.

Der Druckring 11 ist eine Planscheibe mit in der Außenumfangsfläche vorhandenen Durchbrüchen oder Ausnehmungen 53, die an die Querschnittsgestalt der Rippen 49 angepasst sind, damit im montierten Zustand der Druckring 11 gegenüber dem Einsatzstück bzw. Rippen 49 frei verschieblich ist. Der Druckring 11 enthält eine zylindrische Durchgangsbohrung 54, mit der der Druckring 11 mit Spiel auf der Außenumfangsfläche 32 verschieblich ist.

Die Widerlagerscheibe 9 ist ebenfalls eine dünne Scheibe mit einer Bohrung 55, deren Durchmesser dem Durchmesser der Bohrung 54 entspricht und die an Ihrer Außenumfangsseite mit einer Vielzahl von radial wegstehenden Fortsätzen 56 versehen ist, zwischen denen Kanäle 57 entstehen. Die Kanäle 57 setzen sich über die Rückseite der Widerlagerscheibe 9 fort.

Zwischen der Widerlagerscheibe 9 und dem Druckring 11 ist eine Schraubendruckfeder 58 wirksam.

Schließlich gehören zu dem Buchsenteil 1 zwei zylindrische Verriegelungsstifte 59 sowie zwei Haltekugeln 61. Die zylindrischen Verriegelungsstifte 59 liegen in den Schrägschlitzen 36 und sind in der Länge so bemessen, dass sie bei ihrem maximalen radialen zulässigen Hub die Innenumfangsfläche 39 der Betätigungshülse gerade eben berühren. Sie verlaufen im montierten Zustand tangential zu den zylindrischen Innenraum 39 und rechwinklig zu der Längsachse des Buchsenteils 2, wie dies Figur 2 erkennen lässt. Ihr Abstand voneinander ist etwas größer als die Breite jeder Rippe 49. Die Rippen 49 führen zwischen den Verriegelungsstiften 59 hindurch ohne diese auseinander zu drängen.

Die Haltekugeln 61 befinden sich in den Langlöchern 38, und zwar in jedem Langloch eine. Ihr Durchmesser ist derart festgelegt, dass sie aufgrund der Konizität der Langlöcher 38 nicht in den Kanal 18 fallen können. Ihr Durchmesser ist außerdem größer als die Wandstärke des vorderen Grundkörperabschnitts 3 im Bereich der Langlöcher 38. Sie stehen somit entweder in den Kanal 18 vor, wenn sie mit der Außenumfangsfläche 32 bündig sind, oder sie stehen über die Außenumfangsfläche 32 über, wenn sie nicht in das Lichtraumprofil des Kanals 18 ragen.

Der Durchmesser der Haltekugeln 61 ist größer als der Durchmesser der Verriegelungsstifte 59.

Die Montage des Buchsenteils 1 geschieht wie folgt:

Der vordere Grundkörper Abschnitt 3 wird zunächst mit dem O-Ring 31 versehen, sodann wir in den rückwärtigen Teil des Kanals 18 das mit dem O-Ring 26 versehen Ventilverschlussglied 5 mit dem Kragen 23 voraus eingesteckt, bis es die Lage einnimmt, wie sie Fig. 4 zeigt. Anschließend wird die Kegelfeder 27 in den Durchlass 12 des hinteren Grundkörperabschnitts 4 eingelegt und es werden die beiden Grundkörperabschnitte 3 und 4 mittels der Gewinde 13 und 35 zusammengeschraubt.

Die Außenumfangsfläche des Ringbunds 33 geht im montierten Zustand glatt in die Außenumfangsfläche 15 über.

Wenn der Grundkörper 2 in dieser Weise vormontiert ist, wird von dessen vorderen Ende her der Endring 7 aufgeschoben, dessen rohrförmiger Abschnitt 43 zum Vorderende zeigt. Anschließend wird die Widerlagerscheibe 9 aufgeschoben und die Druckfeder 58 aufgesteckt, der Druckring 11 aufgesetzt und unter zusammendrücken der Druckfeder 58 soweit aufgeschoben, bis die zylindrischen Verriegelungsstifte 59 in die Schrägschlitze 36 eingesetzt werden können.

Nach der Montage der Verriegelungsstifte 59 haben diese eine Lage, wie dies der Querschnitt nach Figur 2 erkennen läßt, d.h. sie liegen parallel zueinander. Mit ihrem mittleren Bereich ragen sie in das Lichtraumprofil des Kanals 18 vor.

Die Schrägschlitze 36 münden zwischen dem vorderen Ende des Grundkörpers 2 und der Ringnut 29 für den O-Ring 31, was die Figuren erkennen lassen.

Die Druckfeder 58, die sich einends an dem Widerlagerring 9 abstützt, drückt den Druckring 11 mit seiner vorderen planen Stirnseite gegen die radial nach außen überstehenden Abschnitte der beiden Verriegelungsstifte 59. Die Verriegelungsstifte 59 liegen am Grund des jeweils zugehörigen Schrägschlitzes 36 an und befinden sich mit ihrer Achse in einer gemeinsamen Ebene, die rechtwinklig zu der Längsachse des Grundkörpers 2 liegt. Sie haben in dieser Stellung den kleinst möglichen Abstand voneinander.

Die Betätigungshülse 6 wird von dem vorderen Ende her auf den Grundkörper 2 aufgesteckt werden. Dazu wurde zunächst der Druckring 11 in Umfangsrichtung gedreht bis die beiden Ausnehmungen 53 zwischen den Enden der beiden Verriegelungsstifte 59 zu liegen kommen. Sodann können die Haltekugeln 61 in die Langlöcher 38 eingesetzt werden und dort beispielsweise mittels eines Magneten gegen herausfallen aus den Langlöchern 38 vorübergehend gesichert werden.

Die Betätigungshülse 6 kann nun von der Vorderseite her auf den vormontierten Grundkörper 2 aufgeschoben werden. Beim Aufschieben gleiten die Rippen 49 zwischen den radial überstehenden Enden der Verriegelungsstifte 59 hindurch und passieren auch die Ausnehmungen 53. Als Abschluss der Montage wird von der Rückseite her der Verschluss- oder Endring 7 in die Betätigungshülse 6 eingedrückt, wobei seine Rastnase 46 in den Ausnehmungen 42 verrasten. Die Widerlagerscheibe 9 ist zwischen den freien Enden der Rippen 49 und dem Abschlussring 7 eingespannt.

Im montierten Zustand ist das vordere Ende der Betätigungshülse 6 mit dem vorderen Ende des Grundkörpers 2 bündig. Der Abschlussring 7 liegt mit seinem vorderen Stirnende an der Rückseite der Widerlagerscheibe 9 an, die gegen die Ringschulter 34 gedrückt wird. Gleichzeitig drückt die Feder 58 den Druckring 11 gegen die radial überstehenden Enden der Zylinderstifte 59, die ihrerseits in einem axialen Spalt liegen, der von der Vorderseite des Druckrings 11 und den Druckflächen 50 des Einsatzstücks 8 begrenzt ist. Die Betätigungshülse 6 kann gegen die Wirkung der Feder 58 nur nach vorne verschoben werden. Ein Bewegung in entgegengesetzter Richtung wird durch die in der Betätigungshülse 6 festgelegte Widerlagerscheibe 9 in Verbindung mit der Ringschulter 34 verhindert.

Im montierten Zustand befindet sich in der Ruhestellung der Betätigungshülse 6 die vorne liegenden Enden der Nuten 52 für die jeweilige Haltekugel 61 im Abstand zum hinteren Ende des jeweiligen Endes des Langlochs 38. Die Nuten 52 bezogen auf die Umfangsrichtung fluchten mit den Langlöchern 38.

Wenn die Haltekugeln 61 am hinteren Ende des jeweils zugehörigen Langloches 38 anliegen, befinden sie sich bezogen auf die Längsachse des Grundkörpers 2 auf einer Höhe, die der Höhe der Verriegelungsstifte 59 entspricht, wenn diese am Grund des jeweils zugehörigen Schrägschlitzes 36 anliegen. Die Haltekugeln 61 liegen dann geradeeben noch in den Nuten 52. Würden sie weiter nach vorne bewegt werden, würden sie aus den Nuten 52 heraus auf die Innenfläche 48 gelangen.

Die Ruhe- oder Nullstellung der Betätigungshülse 6 liegt vor, wenn die Vorderseite des Abschlussrings 7 ohne Kraft gegen die Rückseite des Widerlagerrings 9 anliegt, während die Druckflächen 50 spannungsfrei zwischen den den Enden der Verriegelungsstifte 59 liegen.

Ausgehend von dieser Null- oder Ruhestellung kann die Betätigungshülse 6 nur nach vorne geschoben werden. Hierbei nimmt der Abschlussring 7 die Widerlagerscheibe 9 mit nach vorne und verschiebt sie gegen die Wirkung der Druckfeder 58. Die Verriegelungsstifte 59 werden dadurch nicht bewegt.

Außerdem kann die Betätigungshülse 6 in Umfangsrichtung begrenzt gedreht werden, wobei sie die übersteheden Enden der Verriegelungsstifte 59 mitnimmt. In jeder möglichen Drehstellung überdecken die Rippen 49 die Langlöcher 38.

Im Verlauf der Drehbewegung laufen die Haltekugeln 61 aus den beiden diametral einander gegenüberliegenden Nuten heraus auf die daneben liegenden Stützflächen 51, wodurch sie radial nach innen in das Lichtraumprofil des Kanals 18 hineingedrängt werden.

Die Funktion wird nachstehend anhand der Figuren 3-7 erläutert. Bei der Betrachtung der Figuren ist zu berücksichtigen, dass in der oberen Hälfte jeder Figur der Buchsenteil 1 in einer Richtung senkrecht zu dem betreffenden Verriegelungsstift 59 geschnitten ist, während im unteren Teil jeder Figur der Schnitt durch eines der Langlöcher 38 führt.

Die Schnittflächen im oberen und im unteren Teil jeder Figur stehen also an sich im Winkel von 90° zueinander.

Fig. 4 zeigt die Ruhestellung vor dem Einführen eines Steckers 65. Der Stecker 65 ist im wesentlichen rohrförmig und weist, bezogen auf seine Länge, in der Mitte einen Sechskantbund 66 auf, der zur Rückseite in ein Anschlussteil 67 mit Außengewinde 68 übergeht und der zum vorderen Ende einen zylinderförmigen rohrförmigen Ansatz 69 trägt. Der Ansatz 69 ist mit einer umlaufenden im Querschnitt trapezförmigen Ringnut 71 versehen. An seinem vorderen Ende bei 72 verjüngt er sich auf einen Durchmesser entsprechend dem Durchmesser des verjüngten Teils des Kanals 18. Auf diese Weise entsteht im Abstand zum vorderen Ende des Steckers 65 eine umlaufende Rippe 73, deren Außendurchmesser etwas kleiner ist als der im Durchmesser weitere Teil des Kanals 18.

Die Schrägschlitze 36 sind derart gestaltet, dass die Verriegelungsstifte 59 zueinander parallel verlaufen und einen minimalen Abstand voneinander haben, der etwa dem Durchmesser des Abschnitts 71 entspricht, jedoch kleiner als der Außendurchmesser der Rippe 73.

Wenn der Stecker 65 gemäß Fig. 4 eingeführt wird, kommt die Rippe 73 mit den gegebenenfalls im vorderen Abschnitt der jeweiligen Langlöcher 38 liegenden Haltekugeln 61 in Berührung. Im vorderen Bereich der Langlöcher 38 werden die Haltekugeln 61 von den Stützflächen 48 in den Kanal 18 vorragend gehalten, wodurch die genannte Berührung zustande kommen kann. Beim weiteren Einführen schiebt die Rippe 73 die Kugeln 61 vor sich her, bis sie in die Nuten 52 gelangen und radial nach außen ausweichen können. Die Rippe 73 kann somit frei den Wirkbereich der Haltekugeln 61 passieren und trifft auf die in das Lichtraumprofil des Kanals 18 ragenden Verriegelungsstifte 59.

Beim weiteren Einschieben drängt der Stecker 65 mit der Rippe 73 die beiden Verriegelungsstifte 59 gegen die Wirkung der Druckfeder 58 zurück, wobei sie wegen der schrägen Anordnung der Schrägschlitze 36 auch radial nach außen zurückweichen, soweit bis der Spalt zwischen den beiden Verriegelungsstiften 59 die Rippe 73 passieren läßt. Sobald die Rippe 73 an den Verriegelungsstiften 59 vorbei geglitten ist, werden die Verriegelungsstifte 59 von dem Druckring 11 zurück in die Ausgangslage gedrückt, weil die Feder 58 ständig bestrebt ist den Druckring 11 zum vorderen Ende des Buchsenteils 1 hin zu verschieben.

In der eingesteckten Lage gemäß Fig. 5 sind die Verriegelungsstifte 59 hinter der Rippe 73 verrastet. Der zylindrische Abschnitt 72 liegt dichtend an dem O-Ring 29 an und außerdem ist das Ventilverschlussglied 5 gegen die Wirkung der Kegelfeder 27 soweit zurückgeschoben, bis die rechteckigen Öffnungen 24 außerhalb der Dichtfläche 21 stehen.

Da die Wandstärke des Buchsenteils 2 im Bereich des vorderen Endes des Kanals 18 kleiner ist als der Durchmesser der Haltekugeln 61, bleiben die Haltekugeln 61 zwangsläufig in einem Raum, der einerseits von der Nut 71 und andererseits von der Nut 52 sowie dem Übergang der jeweiligen Nut 52 in die Stützfläche 48 begrenzt ist. Sie werden dadurch im Bereich des hinteren Ende des jeweiligen Langloches 38 gehalten. In dem besagten Raum liegen die Haltekugeln 61 ohne Vorspannung.

Es besteht eine nach außen hin abgedichtete strömungsmäßige Verbindung zwischen dem hinteren Teil des Durchlasses 12 des Grundkörpers und dem Innenraum des Steckers 65, womit Druckluft ungehindert in den an dem Stecker 65 angeschlossenen Verbraucher einströmen kann.

Der in der Entlüftungskupplung herrschende Druck vermag den Stecker 65 nicht herauszuschleudern, weil die Verriegelungsstifte 59 von der Rippe 73 gegen die betreffende Wand des jeweiligen Schrägschlitzes 36 gedrückt werden. Da diese Wand wie gezeigt schräg verläuft, wird gleichzeitig der Verriegelungsstift 59 radial nach Innen gedrückt.

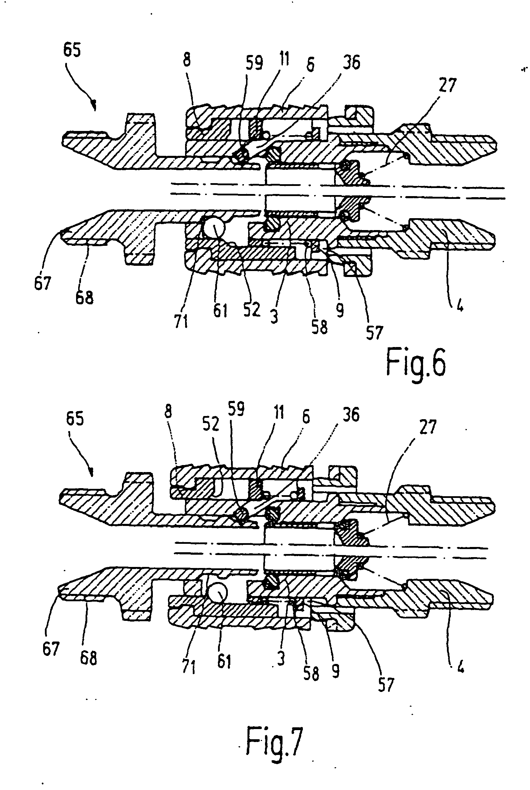

Zum Trennen der Entlüftungskupplung wird die Betätigungshülse 6 nach der einen oder anderen Seite gegenüber dem Grundkörper 2 gedreht. Die Gedrehte Stellung ist in den Fig. 3 und 6 gezeigt. Die mit der Betätigungshülse 6 starr verbundenen Flankenflächen 50 drücken einseitig gegen die aus dem Grundkörper 2 hervorstehenden Enden der Verriegelungsstifte 59. Die Verriegelungsstifte 59 vollführen eine begrenzte Schwenk- oder Kippbewegung, bei der die gegenüberliegende Berührungsstelle zwischen dem jeweiligen Verriegelungsstift 59 und dem Grund des Schrägschlitzes 36 das Schwenkwiderlager bildet. Der Verriegelungsstift 59 benimmt sich wie eine einarmiger Hebel. Gleichzeitig mit der Kippbewegung bewegt er sich gegen die Wirkung der Druckfeder 58 auch angenähert schraubenförmig nach hinten. Infolge der Schwenkbewegung vergrößert sich der Abstand zwischen den Verriegelungsstiften 59 auf einen Abstand, der der Rippe 73 des Steckers 65 ein Passieren ermöglicht. Im gedrehten Zustand ist die Druckfeder 58 bis zum Aufeinanderliegen der Federwindungen zusammengedrückt. Ein Vorschieben der Betätigungshülse 6 ist in dieser Stellung nicht möglich.

Durch das Drehen der Betätigungshülse 6 bewegen sich die Nuten 52 zur Seite von den Langlöchern 38 weg. Die Haltekugeln 61 werden gezwungen die Nuten 52 zu verlassen und auf die daneben liegenden Bereiche der Innenflächen 51 auf zu laufen, wodurch die Haltekugel 61 radial nach Innen gedrängt wird. Die Abmessungen sind so aufeinander abgestimmt, dass, wenn die Verriegelungsstifte 59 anfangen die Rippe 73 freizugeben, die Haltekugeln 61 in den Bereich der Fläche neben den Nuten 52 gelangt sind. Damit ragen die Haltekugeln 61 in die Nut 71, und zwar noch bevor die Verriegelungsstifte 59 die Rippe 73 freigegeben haben.

Sobald die Rippe 73 die Verriegelungsstifte 59 passieren kann, weil sie von der Betätigungshülse 6 weit genug nach hinten und damit radial nach außen gebracht sind, wird der Stecker 65 aufgrund des herrschenden Innendrucks aus dem Buchsenteil 2 herausgeschleudert. Die in der Nut 71 sitzenden Haltekugeln 61 werden von dem Stecker 65 mitgenommen und gestatten eine Axialbewegung des Steckers 65, bis die Haltekugeln 61 am vorderen Ende des jeweils zugehörigen Langloches 38 angekommen sind, wie dies Fig. 7 zeigt. Ein weiteres Herausbewegen aus dem Buchsenteil 2 wird durch die beiden Haltekugeln 61 blockiert. Diese können von der Rippe 73 nicht radial nach außen gedrängt werden. Daran werden sie durch die Innenfläche 48 des Einsatzes 8 gehindert.

Wenn der Benutzer jetzt die Betätigungshülse 6 loslässt wird die Betätigungshülse durch die Druckfeder 58 in die Ruhestellung gedreht, wie sie in den Figuren 4 und 7 gezeigt ist. Dabei wirkt die Druckfeder 58 unmittelbar gegen den Druckring 11, der seine Kraft auf die verschwenkten Enden der Verriegelungsstifte 59 überträgt, die ihrerseits an den Flankenflächen 50 anliegen und somit die Betätigungshülse 6 wieder in die Ruhestellung zurückdrehen. Die Nuten kommen wieder in eine fluchtende Stellung mit den Langlöchern 38. Die Haltekugel 61 sind nun jedoch im vorderen Teil der Langlöcher 38 im Zusammenwirken mit der Nut 71 des Steckers 65 gekammert.

Auch in dieser Stellung halten die Haltekugeln 61 den Stecker 65 im Buchsenteil 2 fest. Die axiale Länge der vorderen Stützfläche 48 ist so bemessen, dass in der Ruhestellung der Betätigungshülse 6 der Übergang zu den Nuten 52 jenseits der Haltekugel 61 liegt. Die Haltekugeln 61 werden von der Rippe 73 gegen das vordere Ende des betreffenden Langloches 38 beziehungsweise die vordere Stützfläche 48 gedrückt. Diese Stellung des Steckers 65 kann als Entlüftungsstellung bezeichnet werden.

In der Entlüftungsstellung liegt das Ventilverschlussglied 5 mit seiner O-Ringdichtung 26 auf der Dichtfläche 21 auf und sperrt die von einer Druckluftquelle kommenden Druckluft ab. Gleichzeitig kann sich die Verbindungsleitung zum Verbraucher, der an dem Stecker 65 angeschlossen ist, durch den Spalt zwischen der Stirnseite des Fortsatzes 69 und der Stirnseite des becherförmigen Kragens 23 des Ventilverschlussgliedes 5 entlüften. Das Abströmen der Luft geschieht durch die Kanäle 57 und die zwischen den Rippen 45 entstehenden Kanäle des Verschlussrings 7. Hierdurch wird ein Druckaufbau vermieden, der Bestrebt wäre die Betätigungshülse 6 nach vorne zu schieben.

Der Stecker 65 wird während der Entlüftung, d.h. dem Druckabfall in der Leitung zum Verbraucher in einer Zwischenstellung mechanisch formschlüssig festgehalten.

Um den Stecker 65 vollständig aus dem Buchsenteil 1 herausziehen zu können, wird die Betätigungshülse 6 gegen die Wirkung der Druckfeder 58 nach vorne geschoben. Die Nuten 52 kommen dadurch in den Bereich der Haltekugeln 61 und gestalt diesen, wie Fig. 8 zeigt, ein radial nach außen gerichtetes Zurückweichen hinter die Außenkontur des Kanals 18, womit die Rippe 73 passieren kann, beziehungsweise der Stecker 65 herausgezogen werden kann.

In der vorgeschobenen Stellung der Betätigungshülse 6 liegt das axial vorne befindlichen Ende der Nut 52 etwa bündig zum vorderen Rand des betreffenden Langlochs 38.

Wie die Funktionsbeschreibung zeigt, sind bei eingestecktem Stecker 65 die Verriegelungsstifte 59 und die Haltekugeln 61 gleichzeitig in derselben Nut 71 des Steckers 65 festgehalten. Sie sind somit gleichzeitig wirksam, wenn die Verriegelungsstifte 59 anfangen die Rippe 73 freizugeben.

Die fluchtende Ausrichtung der Rippen 49 mit den Langlöchern 38 wird durch die überstehenden Enden der Verriegelungsstifte 59 gewährleistet, wie dies Fig. 2 erkennen läßt. Die Rippen 49 werden zwischen den Verriegelungsstiften 59 geführt, womit zwangsläufig sichergestellt ist, dass die Nuten 52 auf die betreffenden Langlöcher 38 ausgerichtet bleiben.

Eine Entlüftungskupplung weist einen Grundkörper auf in dem zwei Schrägschlitze enthalten sind, die einen Kanal im Grundkörper anschneiden. Die Schrägschlitze dienen der Aufnahme von zylindrischen Verriegelungsstiften die endseitig über den Grundkörper überstehen. Symmetrisch zwischen den Schrägschlitzen verteilt sind zwei Langlöcher in denen sich Haltekugeln befinden. Die Langlöcher führen ausgehend von dem Mündungsbereich der Schrägschlitze im Kanal zum vorderen Ende des Grundkörpers.

Die Verriegelungsstifte werden mit Hilfe eines Druckrings und einer Feder die sich an einem hinteren Widerlager des Grundkörpers abstützt in die nach vorne geschobenen Stellung gedrückt, in der sie tangential durch das Lichtraumprofil des Kanals verlaufen.

Die radiale Bewegung der Haltekugeln wird durch vordere und hintere Stützflächen gesteuert, die unterschiedlichen Abstand von der Längsachse des Grundkörpers haben. Durch Drehen der Betätigungshülse erfolgt ein Bewegen der Verrigelungsstifte.

## Patentansprüche

1. Buchsenteil (1) einer Fluidkupplung,
mit einem einen durchgehenden, geraden und rotationssymmetrischen Kanalabschnitt (18) enthaltenden Grundkörper (2), der von einer Außenumfangsfläche (32) begrenzt ist, auf dessen Außenumfangsfläche (32) eine in axialer Richtung zeigende Schulter (34) ausgebildet ist und der ein vorderes und ein hinteres Ende bildet, wobei von dem vorderen Ende her ein Stecker (65) in den Kanal (18) einführbar ist,
mit wenigstens einem ersten Schlitz (36) in dem Grundkörper (2), dessen Lichtraumprofil tangential den Kanal (18) schneidet und dessen Wände (37) parallel zu einer Ebene sind, die schräg zu der Längsachse des Kanals (18) ausgerichtet ist,
mit wenigstens einem Verriegelungsstift (59), der sich in dem ersten Schlitz (36) befindet und mit seinen beiden Endabschnitten über die Außenumfangsfläche (32) des Grundkörpers (2) übersteht,
mit wenigstens einer Druckfedereinrichtung (58), die dazu eingerichtet ist, den wenigstens einen Verriegelungsstift (59) gegen den Grund des Schlitzes (36) vorzuspannen, mit einem in dem Kanal (18) enthaltenen Ventil (5,21), das bei eingeschobenem Stecker (65) von diesem in der geöffneten Stellung gehalten wird, **gekennzeichnet durch** eine auf dem Grundkörper (2) drehbar angeordneten Betätigungshülse (6), deren Innenraum in wenigsten einen ersten (41) und einen zweiten (39) Abschnitt gegliedert ist, von denen der erste (41) dem vorderen Ende benachbart ist, wobei die Betätigungshülse (6) aus einer zentrierten Rotationsstellung in eine Entriegelungsstellung rotatorisch zu bewegen ist, in der der Verriegelungsstift (59) in eine Stellung gebracht ist, in der er außerhalb des Lichtraumprofils des Kanals steht,
mit wenigstens einer in dem zweiten Abschnitt der Betätigungshülse (6) enthaltenen Rippe (49), die parallel zu der Längsachse der Betätigungshülse (6) verläuft, die drehfest mit der Betätigungshülse (6) verbunden ist und die dazu eingerichtet ist, mit einem der Endabschnitte des Verriegelungsstifts (59) zusammen zu wirken.

2. Buchsenteil nach Anspruch 1, **dadurch gekennzeichnet, dass** zwei Schlitze (36) enthalten sind, die sich bezüglich der Längsachse des Kanals (18) diametral gegenüber liegen und deren Wände (37) Ebenen definieren, die in Richtung auf das vordere Ende konvergieren, wobei jeder von ihnen einen Verriegelungsstift (59) enthält, und dass zwei Rippen (49) in der Betätigungshülse (6) enthalten sind.

3. Buchsenteil nach Anspruch 1, **dadurch gekennzeichnet, dass** die Breite der Rippen (49) gemessen in Umfangsrichtung des Grundkörpers (2) etwa dem Abstand der Verriegelungsstifte (59) in der Ruhestellung entspricht.

4. Buchsenteil nach Anspruch 1, **dadurch gekennzeichnet, dass** die Betätigungshülse (6) einen im Wesentlichen rohrförmigen Einsatz (8) enthält, der wenigstens einen axialen Fortsatz aufweist, der die wenigstens eine Rippe (49) bildet.

5. Buchsenteil nach Anspruch 4, **dadurch gekennzeichnet, dass** der rohrförmig Einsatz (8) in der Betätigungshülse (6) unverdrehbar ist.

6. Buchsenteil nach Anspruch 1, **dadurch gekennzeichnet, dass** es eine Entlüftungseinrichtung (6,38,51,52,61) aufweist.

7. Buchsenteil nach Anspruch 6, **dadurch gekennzeichnet, dass** die Entlüftungseinrichtung (6,38,51,52,61) eine Halteeinrichtung (6,38,51,52,61) aufweist, die dazu eingerichtet ist, den Stecker (65) nach der Freigabe durch die Verriegelungsstifte (59) in einer Entlüftungsstellung in dem Buchsenteil (2) zu halten.

8. Buchsenteil nach Anspruch 6, **dadurch gekennzeichnet, dass** die Entlüftungseinrichtung (6,38,51,52,61) die Betätigungshülse (6) umfasst, die auf dem Grundkörper (2) zusätzlich verschieblich gelagert ist, und zwar derart, dass eine translatorische Bewegung der Betätigungshülse (6) die Verriegelungsstifte (59) nicht bewegt.

9. Buchsenteil nach Anspruch 7, **dadurch gekennzeichnet, dass** zu der Halteeinrichtung (6,38,51,52,61) wenigstens ein Langloch (38), das von der Außenumfangsfläche (32) ausgehend bis zu dem Kanal (18) reicht und dessen Längsachse zu der Längsachse des Kanals (18) parallel ausgerichtet ist, und wenigstens ein Haltekörper (61) gehören, der in dem Langloch (38) enthalten ist und dessen Abmessungen in radialer Richtung bezogen auf den Grundköper (2) größer ist als die Wandstärke des Grundkörpers (2) im Bereich des Langlochs (38).

10. Buchsenteil nach Anspruch 6, **dadurch gekennzeichnet, dass** zu der Halteeinrichtung (6,31,51,52,61) wenigstens eine erste Stützfläche (52) für den Haltekörper (61)und wenigstens eine die erste Stützfläche (48) zumindest U-förmig umgebende zweite Stützfläche (48,51) für den Haltekörper (61) gehören, wobei beide Stützflächen (52;48,51) an der Betätigungshülse (6) angeordnet sind, wobei die Abmessungen derart gestaltet sind,
dass die zweite Stützfläche (48,51) einen radialen Abstand aufweist, derart, dass ein an der zweiten Stützfläche (48) anliegender Haltekörper (61) in den Kanal (18) hineinragt,
dass die erste Stützfläche (52) einen radialen Abstand aufweist, derart, dass ein an der ersten Stützfläche (52) anliegender Haltekörper (61) nicht in das Lichtraumprofil des Kanals (18) hineinragt,
dass der Haltekörper (61) in derjenigen Lage, in der er in dem Langloch (38) am weitesten von dem vorderen Ende entfernt ist, sich im wesentlichen auf der gleiche Höhe befindet wie der Verriegelungsstift (59), wenn er sich in einer Lage befindet, in der er dem vorderen Ende am nächsten benachbart ist,
dass in der Ruhestellung der Betätigungshülse (6) die erste Stützfläche (52) dem hinteren Ende des Langlochs (38) gegenüber steht und die zweite Stützfläche (48,51) von dem hinteren Ende des Langlochs (38) einen Abstand aufweist, derart, dass der Haltekörper (61) mit geringem Spiel auf der Höhe des Verriegelungsstifts (59) gehalten wird.

11. Buchsenteil nach Anspruch 10, **dadurch gekennzeichnet, dass** die Rippe (49) mit ihrer radial innen liegenden Fläche (51) einen Teil der zweiten Stützfläche bildet.

12. Buchsenteil nach Anspruch 6, **dadurch gekennzeichnet, dass** die Betätigungshülse (6) aus der Ruhestellung nach vorne in die Freigabestellung verschiebbar ist, in der die Haltekörper (61) aus dem Lichtraumprofil des Kanals (18) herausbewegbar sind.

13. Buchsenteil nach Anspruch 10, **dadurch gekennzeichnet, dass** die zweite Stützfläche (48) an der Betätigungshülse (6) ausgebildet ist.

14. Buchsenteil nach Anspruch 10, **dadurch gekennzeichnet, dass** die zweite Stützfläche (48) ein Ausschnitt aus einer Zylinderfläche ist, die zu der Längsachse des Kanals (18) koaxial ist.

15. Buchsenteil nach Anspruch 10, **dadurch gekennzeichnet, dass** die zweite Stützfläche (48) an der Innenseite des rohrförmigen Einsatzes (8) ausgebildet ist.

16. Buchsenteil nach Anspruch 10, **dadurch gekennzeichnet, dass** die zweite Stützfläche (51) ein Ausschnitt aus einer Zylinderfläche ist, die zu der Längsachse des Kanals (18) koaxial ist.

17. Buchsenteil nach Anspruch 10, **dadurch gekennzeichnet, dass** die erste Stützfläche (52) eine Nut ist, die an der Innenseite der Rippe (49) ausgebildet ist und die zu der Längsachse des Kanals (18) parallel ist.

18. Buchsenteil nach Anspruch 10, **dadurch gekennzeichnet, dass** zwei Langlöcher (38) enthalten sind, die sich bezüglich der Längsachse des Kanals (18) diametral gegenüberliegen.

19. Buchsenteil nach Anspruch 10, **dadurch gekennzeichnet, dass** die Weite des Langlochs (18) gemessen rechtwinklig zu dessen Längsachse an der Außenumfangsfläche (32) des Grundkörpers (2) größer ist als auf der Seite des Kanals (18), derart, dass ein in dem Langloch (38) befindlicher Haltekörper (61) daran gehindert ist, das Langloch (38) in Richtung auf den Kanal (18) zu passieren, wobei die Abmessungen derart gewählt sind, dass der Haltekörper (61) in einer Lage, in der er der Längsachse des Kanals (18) am nächsten benachbart ist, in den Kanal (18) hineinragt.

20. Buchsenteil nach Anspruch 10, **dadurch gekennzeichnet, dass** der Haltekörper (61) von einer Kugel gebildet ist.

21. Buchsenteil nach Anspruch 10, **dadurch gekennzeichnet, dass** der Haltekörper die Gestalt eines Pilzes aufweist und dass das Langloch eine umlaufende Schulter enthält.

22. Buchsenteil nach Anspruch 1, **dadurch gekennzeichnet, dass** die Federeinrichtung (58) von lediglich einer einzigen schraubenförmigen Druckfeder (58) gebildet wird.

23. Buchsenteil nach Anspruch 1, **dadurch gekennzeichnet, dass** der Grundkörper (2) aus einem vorderen und einem hinteren Abschnitt (3,4) besteht, die miteinander formschlüssig verbunden sind, und dass einer der Abschnitte (3,4) eine Schulter (34) bildet, die Teil von Anschlagmitteln (9,34) sind, die ein Verschieben der Betätigungshülse (6) nach hinten verhindern.

24. Buchsenteil nach Anspruch 13, **dadurch gekennzeichnet, dass** in einem Ringspalt zwischen der Betätigungshülse (6) und dem Grundkörper (2) ein Widerlagerring (9) enthalten ist, der zur Anlage an der Schulter (34) vorgesehen ist.

25. Buchsenteil nach Anspruch 1, **dadurch gekennzeichnet, dass** der Betätigungshülse (6) ein Verschlussring (7) zugeordnet ist.

26. Buchsenteil nach Anspruch 18, **dadurch gekennzeichnet, dass** der Verschlussring (7) mit der Betätigungshülse (6) formschlüssig verbunden ist.

27. Buchsenteil nach Anspruch 19, **dadurch gekennzeichnet, dass** die formschlüssige Verbindung von einer Rastverbindung (42,46) gebildet ist.

28. Buchsenteil nach Anspruch 19, **dadurch gekennzeichnet, dass** die formschlüssige Verbindung von einem Gewinde gebildet ist.

29. Buchsenteil nach Anspruch 1, **dadurch gekennzeichnet, dass** der Verschlussring (7) sich auf jener Seite des Wiederlagers (9) befindet, die von dem vorderen Ende des Grundkörpers (2) abliegt.

30. Buchsenteil nach Anspruch 1, **dadurch gekennzeichnet, dass** der Widerlagerring (9) zwischen dem Verschlussring (7) und der wenigsten eine Rippe (49) eingespannt ist.

31. Buchsenteil nach Anspruch 1, **dadurch gekennzeichnet, dass** die Betätigungshülse (6) aus Metal besteht.

32. Buchsenteil nach Anspruch 1, **dadurch gekennzeichnet, dass** die Betätigungshülse (6) ein Kunststoffspritzteil ist.

## Claims

1. Socket part (1) of a fluid coupling,
with a base body (2), which contains a continuous, straight and rotationally symmetric duct section (18) and is defined by an outer peripheral face (32), on the outer peripheral face (32) of which a shoulder (34) pointing in axial direction is configured and which forms a front and a rear end, wherein a connector (65) can be inserted into the duct (18) from the front end,
with at least one first slot (36) in the base body (2), the clearance profile of which intersects the duct (18) tangentially and the walls (37) of which are parallel to a plane oriented on an angle to the longitudinal axis of the duct (18),
with at least one locking pin (59), which is located in the first slot (36) and projects beyond the outer peripheral face (32) of the base body (2) with its two end sections,
with at least one compression spring means (58), which is arranged to bias the at least one locking pin (59) against the base of the slot (36),
with a valve (5, 21) contained in the duct (18), which with the connector (65) inserted is held by this in the opened position,
**characterised by** an actuating bushing (6) rotatably arranged on the base body (2), the interior of which is divided into at least a first (41) and a second (39) section, of which the first (41) is adjacent to the front end, wherein the actuating bushing (6) can be moved rotationally out of a centred rotation position into an unlocking position, in which the locking pin (59) is brought into a position, in which it stands outside the clearance profile of the duct, with at least one rib (49), which is contained in the second section of the actuating bushing (6) and runs parallel to the longitudinal axis of the actuating bushing (6), and which is connected to the actuating bushing (6) to be fixed against rotation and is arranged to cooperate with one of the end sections of the locking pin (59).

2. Socket part according to claim 1, **characterised in that** two slots (36) are provided, which are diametrically opposed with respect to the longitudinal axis of the duct (18) and the walls (37) of which define planes, which converge towards the front end, wherein each of them contains a locking pin (59), and that two ribs (49) are contained in the actuating bushing (6).

3. Socket part according to claim 1, **characterised in that** the width of the ribs (49) measured in peripheral direction of the base body (2) corresponds approximately to the spacing of the locking pins (59) in the resting position.

4. Socket part according to claim 1, **characterised in that** the actuating bushing (6) contains a substantially tubular insert (8), which has at least one axial extension, which forms the at least one rib (49).

5. Socket part according to claim 4, **characterised in that** the tubular insert (8) is non-rotatable in the actuating bushing (6).

6. Socket part according to claim 1, **characterised in that** it has a venting means (6,38,51,52,61).

7. Socket part according to claim 6, **characterised in that** the venting means (6, 38, 51, 52, 61) has a holding means (6, 38, 51, 52, 61), which is arranged to hold the connector (65) in a venting position in the socket part (2) after release by the locking pins (59).

8. Socket part according to claim 6, **characterised in that** the venting means (6, 38, 51, 52, 61) encompasses the actuating bushing (6), which is additionally displaceably disposed on the base body (2), i.e. in such a manner that a translatory movement of the actuating bushing (6) does not move the locking pins (59).

9. Socket part according to claim 7, **characterised in that** the holding means (6, 38, 51, 52, 61) includes at least one elongated hole (38), which extends from the outer peripheral face (32) as far as the duct (18) and the longitudinal axis of which is oriented parallel to the longitudinal axis of the duct (18), and at least one holding body (61), which is contained in the elongated hole (38) and of which the dimensions in radial direction with respect to the base body (2) are larger than the wall thickness of the base body (2) in the region of the elongated hole (38).

10. Socket part according to claim 6, **characterised in that** the holding means (6, 31, 51, 52, 61) includes at least a first support surface (52) for the holding body (61) and at least a second support surface (48, 51) surrounding the first support surface (48) at least in a U shape for the holding body (61), wherein both support surfaces (52; 48, 51) are arranged on the actuating bushing (6), wherein the dimensions are such
that the second support surface (48, 51) has a radial spacing such that a holding body (61) abutting against the second support surface (48) projects into the duct (18),
that the first support surface (52) has a radial spacing such that a holding body (61) abutting against the first support surface (52) does not project into the clearance profile of the duct (18),
that in the position, in which the holding body (61) is furthest away from the front end, it is located at substantially the same level as the locking pin (59), when it is in a position in which it is the closest adjacent to the front end,
that in the resting position of the actuating bushing (6) the first support surface (52) stands opposite the rear end of the elongated hole (38) and the second support surface (48, 51) is spaced from the rear end of the elongated hole (38) such that the holding body (61) is held with little play at the level of the locking pin (59).

11. Socket part according to claim 10, **characterised in that** the rib (49) forms a part of the second support surface with its face (51) lying radially inwards.

12. Socket part according to claim 6, **characterised in that** the actuating bushing (6) is displaceable forwards out of the resting position into the release position, in which the holding body (61) is movable out of the clearance profile of the duct (18).

13. Socket part according to claim 10, **characterised in that** the second support surface (48) is configured on the actuating bushing (6).

14. Socket part according to claim 10, **characterised in that** the second support surface (48) is a section from a cylinder surface, which is coaxial to the longitudinal axis of the duct (18).

15. Socket part according to claim 10, **characterised in that** the second support surface (48) is configured on the inside of the tubular insert (8).

16. Socket part according to claim 10, **characterised in that** the second support surface (51) is a section from a cylinder surface, which is coaxial to the longitudinal axis of the duct (18).

17. Socket part according to claim 10, **characterised in that** the first support surface (52) is a groove, which is configured on the inside of the rib (49) and is parallel to the longitudinal axis of the duct (18).

18. Socket part according to claim 10, **characterised in that** two elongated holes (38) are provided, which lie diametrically opposite one another with respect to the longitudinal axis of the duct (18).

19. Socket part according to claim 10, **characterised in that** the inner width of the elongated hole (18) measured at right angles to its longitudinal axis is greater on the outer peripheral face (32) of the base body (2) than on the side of the duct (18), such that a holding body (61) located in the elongated hole (38) is prevented from passing through the elongated hole (38) in the direction of the duct (18), wherein the dimensions are selected such that the holding body (61) projects into the duct (18) in a position in which it is the closest adjacent to the longitudinal axis of the duct (18).

20. Socket part according to claim 10, **characterised in that** the holding body (61) is formed by a sphere.

21. Socket part according to claim 10, **characterised in that** the holding body has the shape of a mushroom and that the elongated hole contains a circumferential shoulder.

22. Socket part according to claim 1, **characterised in that** the spring means (58) is formed by only a single helical compression spring (58).

23. Socket part according to claim 1, **characterised in that** the base body (2) comprises a front and a rear section (3, 4), which are positively connected to one another, and that one of the sections (3, 4) forms a shoulder (34), which forms part of stop elements (9, 34), which prevent a displacement of the actuating bushing (6) to the rear.

24. Socket part according to claim 13, **characterised in that** an abutment ring (9) provided for abutment against the shoulder (34) is contained in an annular gap between the actuating bushing (6) and the base body (2).

25. Socket part according to claim 1, **characterised in that** the actuating bushing (6) has an associated closing ring (7).

26. Socket part according to claim 18, **characterised in that** the closing ring (7) is positively connected to the actuating bushing (6).

27. Socket part according to claim 19, **characterised in that** the positive connection is formed by a catch connection (42, 46).

28. Socket part according to claim 19, **characterised in that** the positive connection is formed by a thread.

29. Socket part according to claim 1, **characterised in that** the closing ring (7) is located on the side of the abutment (9) remote from the front end of the base body (2).

30. Socket part according to claim 1, **characterised in that** the abutment ring (9) is clamped between the closing ring (7) and the at least one rib (49).

31. Socket part according to claim 1, **characterised in that** the actuating bushing (6) is made of metal.

32. Socket part according to claim 1, **characterised in that** the actuating bushing (6) is a plastic moulded part.

## Revendications

1. Pièce en forme de douille d'un accouplement de fluide, qui comporte :
- un corps de base (2) contenant un segment de canal (18), rectiligne et de révolution, qui est délimité par une surface périphérique externe (32) portant un épaulement (34) s'étendant en direction axiale avec une extrémité avant et une extrémité arrière, une fiche (65) pouvant être introduite, en partant de l'extrémité avant, dans le canal (18),
- dans le corps de base (2), au moins une première fente (36) dont le profil d'espace libre coupe tangentiellement le canal et qui présente des parois (37) parallèles à un plan oblique par rapport à l'axe longitudinal du canal (18),
- au moins une broche de verrouillage (59) qui se trouve dans la première fente (36), et dont les deux segments d'extrémité font saillie sur la surface périphérique externe (32) du corps de base (2),
- au moins un dispositif à ressort de poussée (58) disposé de manière à mettre en précontrainte une broche de verrouillage (59) sur le fond de la fente (36),
- une soupape (5, 21) montée dans le canal et qui est maintenue en position ouverte par la fiche (65) quand celle-ci est engagée,
cette pièce étant **caractérisée en ce qu'**elle comprend
- montée en rotation sur le corps de base (2) une douille d'actionnement (6) dont l'espace interne est divisé en au moins une première section (41) et une seconde section (39), la première section (41) étant proche de l'extrémité avant, cette douille d'actionnement (6) pouvant passer par rotation d'une position de rotation centrée à une position de déverrouillage, pour amener la broche de verrouillage (59) à une position où elle se trouve en dehors du profil d'espace libre du canal
- au moins une ailette (49) située dans la deuxième section de la douille d'actionnement (6) parallèlement à l'axe longitudinal de cette douille dont elle est solidaire en rotation et qui est conçue de manière à coopérer avec une des parties d'extrémité de la broche de verrouillage (59).

2. Pièce en forme de douille selon la revendication 1, **caractérisée en ce qu'**elle comporte deux fentes (36) qui sont diamétralement opposées par rapport à l'axe longitudinal du canal (18) et dont les parois (37) définissent des plans convergeant en direction de l'extrémité avant, et qui contiennent chacun une broche de verrouillage (59), deux nervures (49) étant prévues dans la douille d'actionnement (6).

3. Pièce en forme de douille selon la revendication 1, **caractérisée en ce que** la largeur des nervures (49), mesurée selon la direction périphérique du corps de base (2) correspond à peu près à la distance entre les broches de verrouillage (59) en position de repos.

4. Pièce en forme de douille selon la revendication 4, **caractérisée en ce que** la douille d'actionnement (6) contient un insert (8) essentiellement tubulaire qui présente au moins un appendice axial formant au moins une ailette (44).

5. Pièce en forme de douille selon la revendication 4, **caractérisée en ce que** l'insert tubulaire (8) ne peut pas tourner dans la douille d'actionnement.

6. Pièce en forme de douille selon la revendication 1, **caractérisée en ce qu'**elle présente un dispositif d'aération (6, 38, 51, 52, 61).

7. Pièce en forme de douille selon la revendication 6, **caractérisée en ce que** le dispositif d'aération (6, 38, 51, 52, 61) présente un dispositif de maintien conçu pour, après libération de la fiche (65) par les broches de verrouillage (59), maintenir celle-ci en position d'aération dans la partie de douille (2).

8. Pièce en forme de douille selon la revendication 6, **caractérisée en ce que** le dispositif d'aération (6, 38, 51, 52, 61) entoure la douille d'actionnement (6) qui est de plus montée coulissante sur le corps de base, et cela de manière qu'une translation de la douille d'actionnement (6) ne fait pas se déplacer la broche de verrouillage (59).

9. Pièce en forme de douille selon la revendication 7, **caractérisée en ce qu'**au dispositif de maintien (6, 38, 51, 52, 61) appartiennent au moins un trou allongé (38) qui s'étend de la surface périphérique externe (32) au canal (18) avec son axe longitudinal parallèle à celui du canal, ainsi qu'au moins un corps de maintien (61) qui est logé dans le trou allongé (38) et qui, selon la direction radiale du corps de base (2) dépasse l'épaisseur de ce corps dans la zone du trou allongé (38).

10. Pièce en forme de douille selon la revendication 6, **caractérisée en ce qu'**au dispositif de maintien (6, 38, 51, 52, 61) appartiennent au moins une première portée d'appui (52) pour le corps de maintien (61) et au moins une seconde portée d'appui (48, 51) pour le corps de maintien (61), qui a la forme d'un U entourant la première portée, ces deux portées (52 ; 48, 51) étant disposées sur la douille d'actionnement (6) et présentant des dimensions telles que
la seconde portée d'appui (48, 51) présente une distance radiale faisant qu'un corps de maintien (61) appliqué sur cette portée (48) pénètre dans le canal,
la première portée d'appui (52) présente une distance radiale faisant qu'un corps de maintien (61) appliqué sur cette portée (52) ne pénètre pas dans le profil d'espace libre de canal (18),
le corps de maintien (61), quand le trou allongé (38) est éloigné au maximum de l'extrémité avant de celui-ci, se trouve essentiellement à la même hauteur que la broche de verrouillage (59) quand celle-ci est dans sa position la plus proche de l'extrémité avant,
en position de repos de la douille d'actionnement (6), la première portée d'appui (52) se trouve en face de l'extrémité arrière du trou allongé (38) et la seconde portée d'appui (48, 51) se trouve à une distance de cette extrémité telle que le corps de maintien (61) est maintenu avec un faible jeu, à la hauteur de la broche de verrouillage (59).

11. Pièce en forme de douille selon la revendication 10, **caractérisée en ce que** l'ailette (49), par sa face radialement interne (51) est une partie de la seconde portée d'appui.

12. Pièce en forme de douille selon la revendication 6, **caractérisée en ce que** la douille d'actionnement (6), partant de sa position de repos, pour coulisser vers l'avant pour venir à la position de libération dans laquelle le corps de maintien (61) peut se déplacer pour sortir du profil d'espace libre du canal (18).

13. Pièce en forme de douille selon la revendication 10, **caractérisée en ce que** la seconde portée d'appui (48) est réalisée sur la douille d'actionnement (6).

14. Pièce en forme de douille selon la revendication 10, **caractérisée en ce que** la seconde portée d'appui (48) est une partie d'une surface cylindrique ayant le même axe longitudinal que le canal (18).

15. Pièce en forme de douille selon la revendication 10, **caractérisée en ce que** la seconde portée d'appui (48) est réalisée sur la face interne de l'insert tubulaire (8).

16. Pièce en forme de douille selon la revendication 10, **caractérisée en ce que** la seconde portée d'appui (51) est une partie d'une surface cylindrique ayant le même axe longitudinal que le canal (18).

17. Pièce en forme de douille selon la revendication 10, **caractérisée en ce que** la première portée interne (52) est une rainure creusée dans la face interne de l'ailette (49) parallèlement à l'axe longitudinal du canal (18).

18. Pièce en forme de douille selon la revendication 10, **caractérisée en ce qu'**elle comporte deux trous allongés (38) diamétralement opposés par rapport à l'axe longitudinale du canal (18).

19. Pièce en forme de douille selon la revendication 10, **caractérisée en ce que** la largeur du trou allongé (38), mesurée perpendiculairement à son axe longitudinal sur la surface périphérique externe (32) du corps de base (2) est supérieure à sa largeur du côté du canal (18) de sorte qu'un corps de maintien (61) se trouvant dans le trou allongé (38) ne peut traverser celui-ci en direction du canal (18), les dimensions étant choisies de manière que ce corps de maintien fait saillie dans le canal (18) quand il est dans une position où il est le plus proche de l'axe longitudinal de ce canal.

20. Pièce en forme de douille selon la revendication 10, **caractérisée en ce que** le corps de maintien (61) est constitué par une bille.

21. Pièce en forme de douille selon la revendication 10, **caractérisée en ce que** le corps de maintien (61) a la forme d'un champignon et le trou allongé présente un épaulement périphérique.

22. Pièce en forme de douille selon la revendication 1, **caractérisée en ce que** le dispositif élastique (58) est constitué seulement par un ressort hélicoïdal de poussée (58).

23. Pièce en forme de douille selon la revendication 1, **caractérisée en ce que** le corps de base (2) comprend une partie avant (3) et une partie arrière (4) reliées entre elles avec verrouillage par combinaison de formes, une de ces parties (3, 4) formant un épaulement (31) faisant partie des moyens de butée (9, 34) qui empêchent un coulissement de la douille d'actionnement (6) vers l'arrière.

24. Pièce en forme de douille selon la revendication 13, **caractérisée en ce que** dans une fente annulaire entre la douille d'actionnement (6) et le corps de base (2) se trouve une bague de palier d'opposition (9) prévue pour s'appuyer sur l'épaulement (34).

25. Pièce en forme de douille selon la revendication 1, **caractérisée en ce qu'**à la douille d'actionnement (6) est associée une bague de fermeture (7).

26. Pièce en forme de douille selon la revendication 18, **caractérisée en ce que** la bague de fermeture (7) est reliée à la douille d'actionnement (6) avec verrouillage par combinaison de formes.

27. Pièce en forme de douille selon la revendication 19, **caractérisée en ce que** la liaison avec verrouillage par combinaison de formes est constituée par une liaison d'arrêt (42, 46).

28. Pièce en forme de douille selon la revendication 19, **caractérisée en ce que** la liaison avec verrouillage par combinaison de formes est constituée par un filetage.

29. Pièce en forme de douille selon la revendication 1, **caractérisée en ce que** la bague de fermeture (7) se trouve sur le côté du palier d'opposition (9) qui est éloigné de l'extrémité avant du corps de base (2).

30. Pièce en forme de douille selon la revendication 1, **caractérisée en ce que** le palier d'opposition (9) est serré entre la bague de fermeture (7) et au moins une ailette (49).

31. Pièce en forme de douille selon la revendication 1, **caractérisée en ce que** la douille d'actionnement (6) est en métal.

32. Pièce en forme de douille selon la revendication 1, **caractérisée en ce que** la douille d'actionnement (6) est une pièce injectée en matière plastique.
